**Europäisches Patentamt**

**European Patent Office**

**Office européen des brevets**

(11) Publication number: **0 056 791**
**B1**

# EUROPEAN PATENT SPECIFICATION

(45) Date of publication of patent specification: **23.09.87**

(51) Int. Cl.⁴: **B 08 B 3/02,** A 61 C 19/00

(21) Application number: **82830003.8**

(22) Date of filing: **06.01.82**

(54) **A cleaning device for dental instruments, in particular, turbine drills and the like.**

(30) Priority: **06.01.81 IT 4752181**

(43) Date of publication of application:
**28.07.82 Bulletin 82/30**

(45) Publication of the grant of the patent:
**23.09.87 Bulletin 87/39**

(84) Designated Contracting States:
**AT BE CH DE FR GB IT LI LU NL SE**

(56) References cited:
**WO-A-80/00413**
**DE-A-2 805 934**
**DE-A-3 000 258**

(73) Proprietor: **MEDICAL ENGINEERING
CONSULTING GRIFO SA**
**CH-6911 Barbengo (CH)**
(73) Proprietor: **VOEST-ALPINE Werkzeuge und
Präzisionstechnik Gesellschaft m.b.H.**
**A-9170 Ferlach (AT)**

(72) Inventor: **Staffolani, Nicola**
**Via Omicini 171**
**I-06100 Perugia (IT)**
Inventor: **Brammertz, Günther**
**Ressnigweg 26**
**A-9170 Ferlach (AT)**

(74) Representative: **Fiammenghi-Domenighetti,
Delfina et al**
**Racheli-Fiammenghi-Fiammenghi Via Quattro
Fontane 31**
**I-00184 Roma (IT)**

Courier Press, Leamington Spa, England.

## Description

The present invention relates to a device adapted to be inserted into the standard apparatus of a dentist's surgery and which permits to carry out an effective washing of an instrument which will be introduced into a treatment chamber, where by means of a first series of nozzles is dispensed a mixture of pressurized air and water, while into said chamber or into another separated chamber, by means of a second series of nozzles, are dispensed jets of air with an addition of a disinfectant medium for the disinfection and the drying of said instrument, after the washing thereof, thus obtaining the perfect cleaning of the dental instruments which are used inside of the oral cavity of the patient, such as the turbine drills and other instruments, as aspirators and the like which can be also permanently connected with the dental apparatus which temporarily houses and controls the operation of said instruments and of which is equipped each dentist's surgery. Said device serves thus for removing from the used instrument saliva, blood, residues of dental material or other materials which have been used in the course of a treatment.

Devices of the kind defined in the preamble of claim 1 are already by practice known for attaining the same purposes, but the solutions, applied up to the date, are unsatisfactory, owing to the limited reliability of the already known devices or methods and owing to the incomplete cleaning which can be obtained. First at all it is well known the conventional method, which can be used only for the cleaning of those instruments which are not permanently connected to the dental apparatus of which each dentist's surgery is equipped, and which can be separated and inserted into an autoclave. In this case the disinfection of said instruments is secured, but never their perfect cleaning, since the instrument is not subject to any mechanical action into said autoclave, but only to a simple boiling so that the removal of the residues adhering to the instruments is never secured. Further, when this method is used, it is necessary that a large and expensive equipment of instruments is available in the dentist's surgery, since the boiling process of the instruments into an autoclave requires a long time and therefore this operation is performed only at time intervals, in general, during the closure times of a dentist's surgery.

Devices are also known which are the objects of the International patent Application WO—A—80/00413 filed in the name of Scheicher and of the German Patent Application DE—A—28 05 934, filed in the name of Redtenbacher; more in particular, this latter concerns a cleaning device for dental instruments, such as turbine drills, comprising a container into which is arranged at least one washing chamber, provided with an entrance opening for the introduction of the instrument to be cleaned and with a plurality of oriented nozzles fed by an external source, said nozzles being designed to the washing of the instrument, while downstream of said first nozzles in the chamber is provided at least a second plurality of nozzles delivering a disinfectant liquid medium from an external source.

This device is adapted for cleaning and disinfect only one drill, which remains permanently connected to the device, and does not permit the removal of the residues due to any surgical intervention. Said device permits to disinfect the instruments by means of jets containing disinfectant media or by means of sterilizing radiations.

WO—A—80/00413 concerns a device for the sterilization of a surgical and dental instrument, by exposing said instrument to the action of oxidising means, during the non-use period thereof. This device cannot be used during a dental intervention, and does not provide any washing off or removal of the residues. In addition the device must be connected to a very complex apparatus, which occupies a large space and which could not be inserted in the standard apparatus of a dentist's surgery, including a movable table, positioned in the front of the patient's chair and on which the instruments are placed during the intervention.

A DE—A—3000 258 patent is also known for cleaning the outer surface of a substantially tubular instrument, as for instance, an endoscope, by means of water jets and the mechanical action of a system of revolving brushes. This device cannot be used for cleaning all the dental and surgical instruments of a dentist's surgery, but it could be used only for instruments of a predetermined size and outline.

In addition the residues could remain entrapped between the brush bristles and could be removed with difficulty and in any case never during a dental intervention.

These devices have the following inconveniences:

— they are expensive to be produced, since they must be integrated into the complicate feeding apparatus of the turbine drill, associated with the armchair on which the patient is sitting;

— since these devices serve as a support for the handgrip of the instrument, their use becomes difficult and requires a considerable time consumption for their cleaning which is carried out at time intervals;

— these devices are adapted only for the cleaning of the drills, but they cannot be used for the cleaning of other dental instruments, such as the spatulas, the pincers, the small mirrors and the hook tools;

— in the first place owing to their configuration and operative system, said devices are not adapted for the aforementioned other intended purposes; in the second place during the work they hamper the employ of the other instruments;

— these devices cannot be integrated in already constructed armchairs.

There is also the risk that using these devices drops can be sprinkled on the patient on account of the fact that, either no discharge orifice is provided (since said devices serve only for the disinfection and not for the washing of the instrument) or said instrument is not dried;

— the recharge of the disinfectant medium is difficult (when such a recharge is provided).

The present invention provides a device as defined in the characterising part of claim 1 and adapted to be easily inserted in the apparatus positioned near the patient's armchair and which permits the cleaning of all the instruments. Said device comprises a first washing chamber, into which will be introduced the instrument which can remain bound with said apparatus; in said chamber jets of pressurized air and water are delivered. Said first chamber serves for the washing of the instrument, which as aforesaid, can also remain restrained to said apparatus and which will be then removed from said first chamber and brought in the inside of a second chamber, where the drying takes place by means of air jets. The duration of the two treatments is controlled manually, by means of two control push buttons by the operator's hand, who must take care that the required operative times be respected, so as to attain the most perfect results and so as to do not incur a useless water waste, even if said device is little expensive to be produced.

The present invention also provides a more improved embodiment, according to which the device comprises a single treatment chamber, and furthermore the controls are automatized by means of an electronic programmer so that the introduction of the instrument to be washed automatically causes the device to operate, first of all, causing the washing means to become operative and then the drying and disinfecting means, and also programming the duration of the respective operative steps. Thus in the meanwhile the operator can continue his work; as a result thereof the work times of the device are respected and the operating cost is maintained as low as possible.

The invention also provides expedients so as to prevent that the water which is used in the treatment chamber can produce squirts which can come outside. In the same way the invention provides also means for improving the discharge of the dirty water was well as of the residues. That is obtained creating in the output pipe suction effects by means of the blowing of pressurized air jets into the flow of the discharge dirty water. According to this variant the device comprises a single treatment chamber provided with an upper entrance opening through which the instrument will be introduced. The invention also provides that said opening be controlled by at least one photo-electric cell, which is designed to cause the automatic starting of a programming unit which controls the sequence and the times of the various operative steps. Said chamber comprises a first series of nozzles adapted to produce jets so oriented towards the space which will be occupied by the instrument; said nozzles are fed by a mixture consisting of pressurized air and water, supplied by respective external sources by means of pipes respectively controlled by a first and a second electric valve, said electric valves being normally maintained in in their closure position.

Underneath the first series of nozzles which deliver the washing mixture, another series of jets are obtained which dispense a pressurized mixture of air and a disinfectant medium, said mixture being produced in a "per se" known unit. Said latter mixture is supplied to the second series of nozzles under the control of a third electric valve.

The programmer, which is designed to become operative under the control of the photo-electric cell, comprises logical circuits controlling the opening of the three electric valves according to the predetermined sequence and times so that the washing can take place in the best conditions and with the least consumption of pressurized water and air as well as of electric energy.

According to a further variant provision is made to provide another series of nozzles positioned before the series of nozzles delivering the washing water, said new series of nozzles being designed to create a jet screen adapted to prevent any escaping of drops through the entrance orifice of said chamber.

By the use of the device according to the invention during long and difficult dental interventions the dentist can thus obtain in a very short time the cleaning of the used instruments so that the same instruments can be used several times during each dental operation always in a condition of a perfect cleaning, that has also a very high psychological favorable effect on the patients who often are sensitive to the sight of blood or other material which can remain adherent to the used instrument.

These and other characteristics and advantages of the device according to the present invention will be better understood from the following description of three embodiments thereof, taking in consideration the accompanying drawings, in which:

Figure 1 shows a longitudinal side view of a first embodiment of the invention, the respective outer longitudinal wall of the container having been removed;

Figure 2 is a top view of the device, shown in Figure 1;

Figure 3 is a bottom view, when the bottom wall has been broken away;

Figure 4 is a diagrammatic vertical longitudinal section taken on line 2a—2a of Figure 2;

Figure 5 is the longitudinal side view of the device according to a second embodiment, the outer longitudinal wall of its container of which has been broken away;

Figure 6 is a similar view taken from the opposite longitudinal side;

Figure 7 is a top view of this second embodiment, showing the upper wall of the container and the entrance opening of the washing chamber;

Figure 8 is the detail of the section of the washing chamber taken on the line A—A of Figure 7;

Figure 9 is a block diagram of the automatic system for the control of the electric valves;

Figure 10 shows the longitudinal view of a third embodiment of the device according to the invention, the respective outer longitudinal wall of the container having been removed;

Figure 11 shows a block diagram of the system for the distribution of the air and of the water; and

Figure 12 is an axial section of the treatment chamber of the device shown in Figure 10.

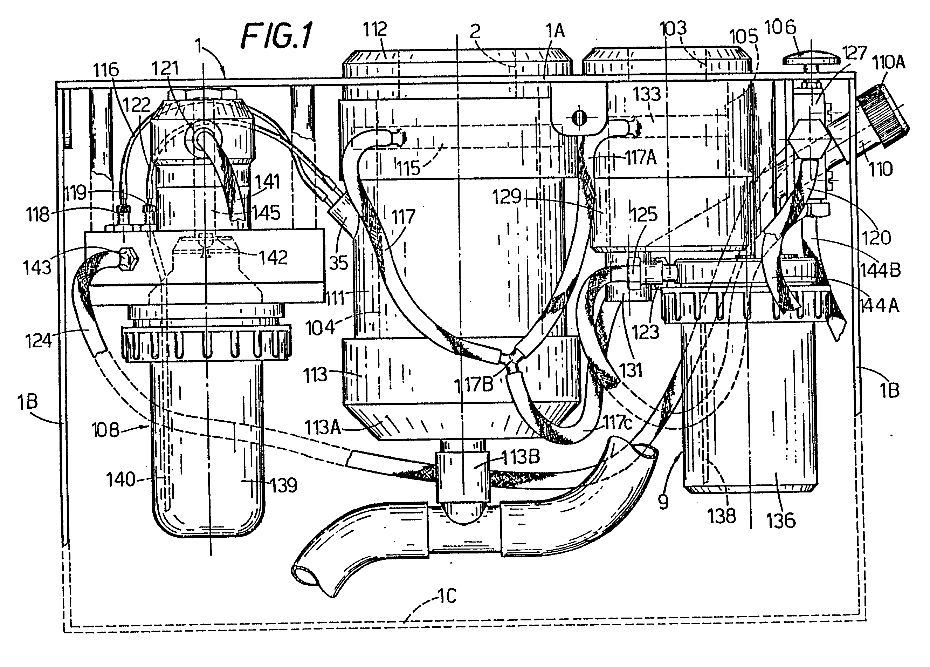

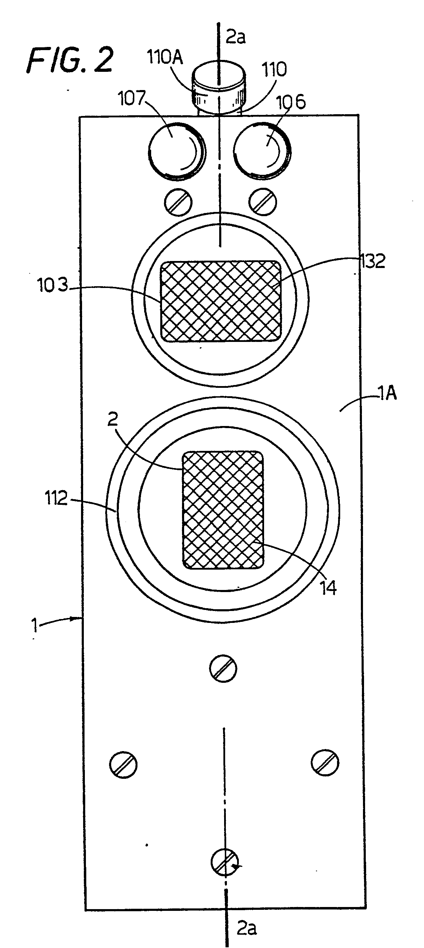

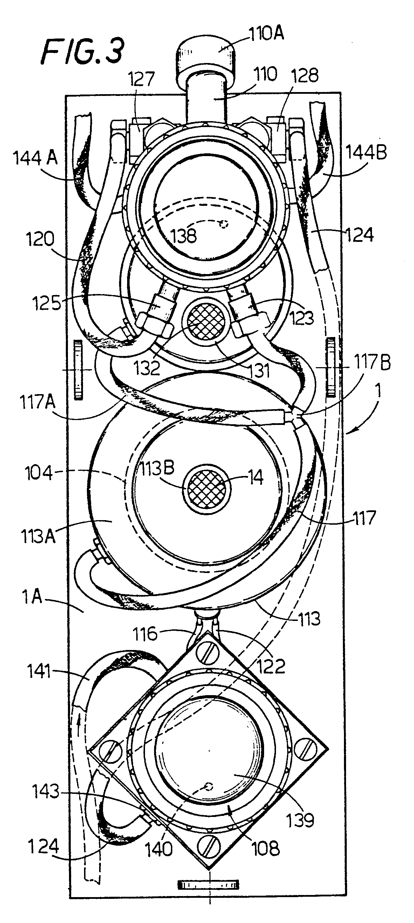

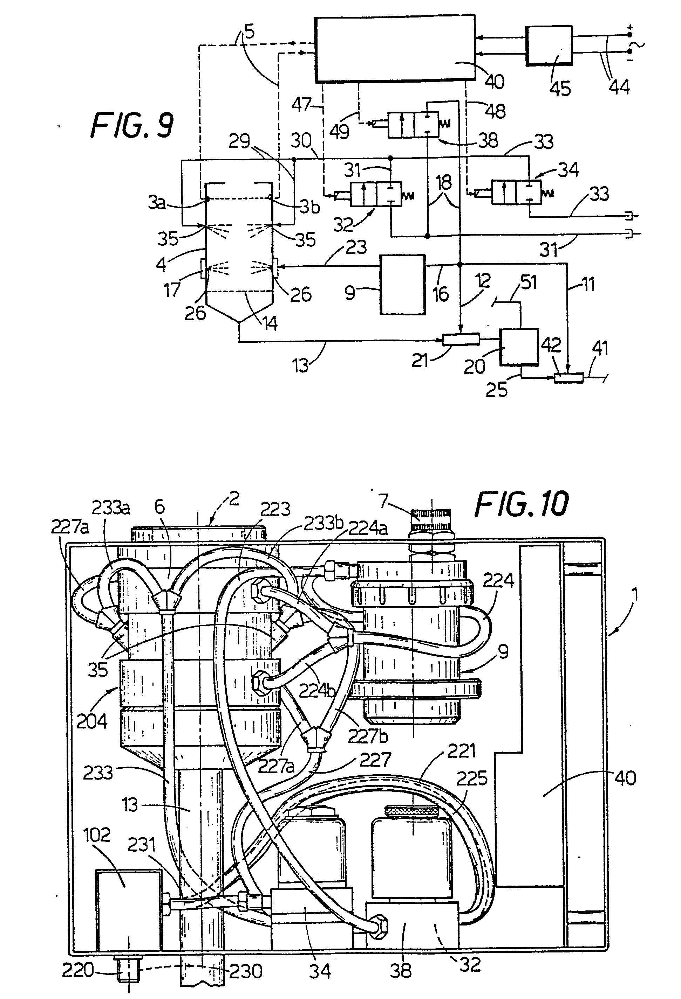

Now referring to the first embodiment shown in the Figures 1 to 9, 1 generically indicates a prismatic container, preferably made of metal and having a box-like shape which comprises all the units which are a part of the device of this invention and which is designated to be applied to the main dental apparatus of each dentist's surgery, which is positioned in the front of the patient's armchair; said apparatus can be preferably of a type which can be composed by prefabricated modular elements which can be assembled so as to obtain a commonly called "composed" apparatus. The container 1 comprises a top wall 1A, side walls 1B and a bottom wall 1C which is supposed to be removed in Figure 3, while in the Figure 1 the front wall 1B has been broken away. In the upper wall 1A are provided the entrance openings 2 and 103, through which will be introduced the instruments to be cleaned inside the first and second treatment chambers respectively generally indicated 104 and 105. Near one end of the wall 1A (Figure 2) are mounted two control push-buttons 106 and 107, positioned one very close to the other so as to be adapted to be selectively or conjointly actuated by the same hand of the dentist. The chambers 104 and 105 are substantially of a cylindrical shape and are constructed and applied in a disassemblable manner, so as to permit to easily performing the maintenance, overhauling and substitution operations of the parts thereof. 108 generally indicates a device for creating a pressurized air stream and at the same time a pressurized water stream which does not contain any disinfectant medium, while a "per se" well known unit, generally indicated 9, is designated to produce a pressurized air flow dragging together a disinfectant medium which is contained in a reservoir 136 and which will be recharged through a pipe 110, the inlet orifice of which is closed by a removable plug 110A.

In the chamber 104 the washing operation as well as a first disinfection of the instrument are carried out, said chamber 104 consisting of a tubular body 111 which hangs from the wall 1A and is fastened thereto by means of a threaded locking ring 112, said body 111 having a lower removable head 113, seal connected to the lower end of said body 111 and which has a funnel-like bottom 113A connected to a pipe union 113B for the discharge of the dirty water upon said bottom 113A a filtering grating 14 is mounted for retaining the possible thick particles of the materials taken away from the instrument by the washing water as well as for the support of said instrument to be washed.

At the upper zone of the body 111 an annular manifold 115 is arranged which is connected by means of a pipe 117 and the pipe 117C through a pipe fitting 117B to the outlet 123 of the unit 9. From said outlet 123 is delivered pressurized air dragging together an atomized disinfectant medium.

The manifold 115 is put in communication with the washing chamber 104 by a plurality of radial nozzles 126 delivering pressurized air jets containing a disinfectant medium, said jets forming a barrage screen underneath the opening 2, which prevents that drops of dirty water can come out of the chamber 104 so as to soil the surrounding objects. Underneath said screen of the jets delivered from the nozzles 126 through the side wall of the body 111 at least a spraying nozzle 35 enters the chamber 104, the outlet conduit 35A of which is connected with two connection pipe unions 35B and 35C to which are respectively connected the pipes 116 and 122 which are, in turn, connected with the air delivery pipe union 118 and the water delivery pipe union 110 of the unit 108; said pipes 116 and 122 are respectively connected with the air outlet conduit and the water outlet conduit 119 respectively of the unit 108 which supply respectively pressurized water and pressurized air which in the inside of each nozzle 35 form the pressurized mixture which is used for the washing of the instrument, which during the washing phase is supported by the grating 14. The second chamber 105 is designed to the second disinfection and to the drying of the instrument. The chamber 105 is formed by a cylindrical body 129 which hangs from the top wall 1A in which the opening 103 is arranged. The chamber 105 has bottom wall 130 inclined towards the discharge conduit 131 over said bottom 130 a filtering grating 132 is mounted. Also in the side wall of the body 129 an annular manifold 133 is arranged which is connected to the pipe 117A which through a three way pipe fitting 117B and a pipe 117C is connected to the outlet pipe union 123.

The manifold 133 feeds a plurality of nozzles 134 which open into the chamber 105 and inject against the instrument, which is housed in said chamber, a plurality of jets of pressurized air having in suspension a disinfectant medium; said jets serve thus for performing the second disinfection and for the perfect drying of the instrument. Of course, nothing prevents that heating means be provided for heating said air.

The unit 9 produces pressurized air dragging together a disinfectant medium. For such a purpose the unit 9 comprises a reservoir 136 for a disinfectant liquid which at time intervals will be recharged through the pipe 110, the inlet orifice of which is closed by a removable plug 110A. 127 is a valve unit which normally closes, but which is caused to be opened by a pressure applied to the push-button 106; said valve unit 127 is put in communication by a pipe 144A with an air compressor (not shown) and which is included in the main apparatus of any dentist's surgery, in which is inserted the device of this invention, while the outlet orifice of the valve 127 is connected to a pipe 120 which is in turn connected to the inlet pipe union 125 of the air into the unit 9, said pipe union 125 extending in the inside of the reservoir 136 with a draft pipe 138 which opens near the bottom of said reservoir, so as to let the pressurized air to bubble through the liquid 137 so that pressurized air is collected above said liquid which drags together disinfectant particles and which will be conveyed through the outlet 123 into the pipe 117C, and then pipes 117 and 117A so as to be delivered by the nozzles 126 and 134 respectively into the chambers 104 and 105. That can occur only until the push-button 106 is pressed and the valve 123 opens.

Now referring to the unit 108, this latter comprises an inlet orifice 121 for the water which is connected by means of a pipe 141 to the common distribution water network which, as it is well known, distributes water having a pressure, which is subjected to frequent pressure drops, so that those apparatus which utilize the pressurized water directly supplied from the urban network are never regular in their operation.

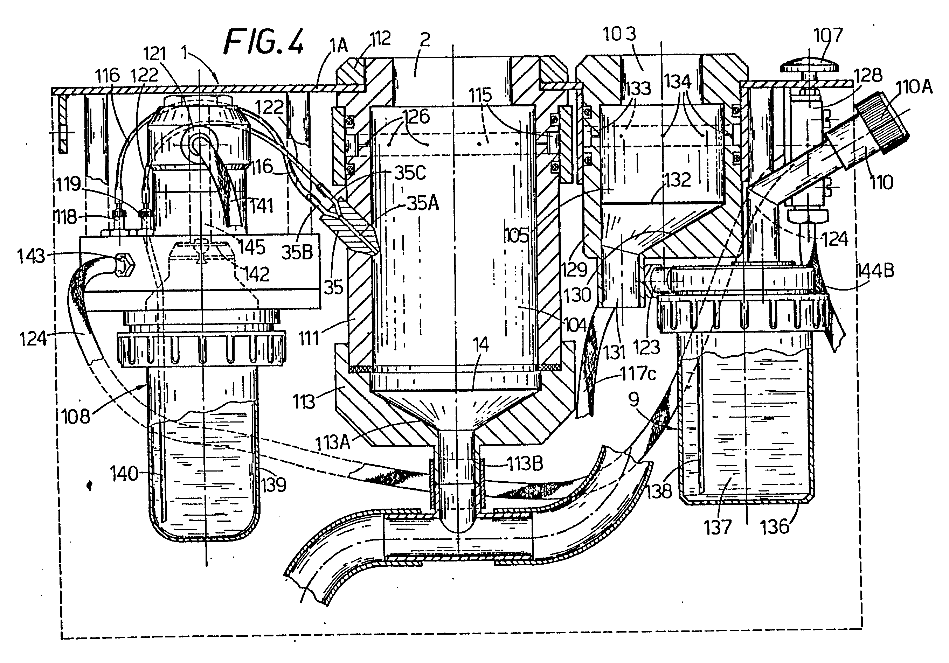

In order to overcome said inconvenience in the device of this invention provision has been made to supply into the washing chamber 104 water, the pressure of which can be obtained and duly adjusted by means of a compressed air flow fed by the aforementioned air compressor. For such a purpose a second auxiliary valve unit 128 is provided the inlet of which is connected by a pipe 144B to said air compressor, while its outlet orifice is connected by a pipe 124 to the inlet orifice 143 of the unit 108, said unit 108 comprises a reservoir 139 for the water, near the bottom of which opens a draft pipe 140 ending with the outlet orifice 119. The reservoir 139 has a predetermined volume and the pipe union 121 is connected with a pipe 145 which extends downwardly in the inside of the unit 108 and is controlled by a diaphragm valve 142 (Figure 4), which is normally opened, but which closes automatically when pressing the push-button 107 the valve 128 opens so that pressurized air is delivered into the unit 108, said air thus collecting above the surface of the water contained into the reservoir 139. Therefore when said air enters a pressure is created above the water surface so that the water will be forced to raise through the pipe 140 and to come out of the pipe union 119 and the pipe 122 so as to reach the nozzle or nozzles 35, while at the same time pressurized air coming out of the pipe union 118 and conveyed through the pipe 116 reaches the nozzle or nozzles 35.

Contemporaneously the air pressure causes the valve 142 to close. As a result thereof, it will be obtained, that when the push-button 107 is pressed, only a predetermined amount of water can be delivered by the nozzle or nozzles 35, said water having always a constant pressure, whichever may be the water pressure in the distribution network. Of course, provision is made that such a predetermined amount of water will be delivered which is sufficient for accomplishing to the task of the washing. That, in fact, permits to obtain a regular discharge of the washing water from the washing chamber, said discharge taking place under the effect of a free fall, while the washing water operates always at a constant pressure. This expedient prevents any flooding in the washing chamber 104, as, on the contrary, can take place, if the washing is not performed by means of a predetermined amount of water, which has not a constant pressure.

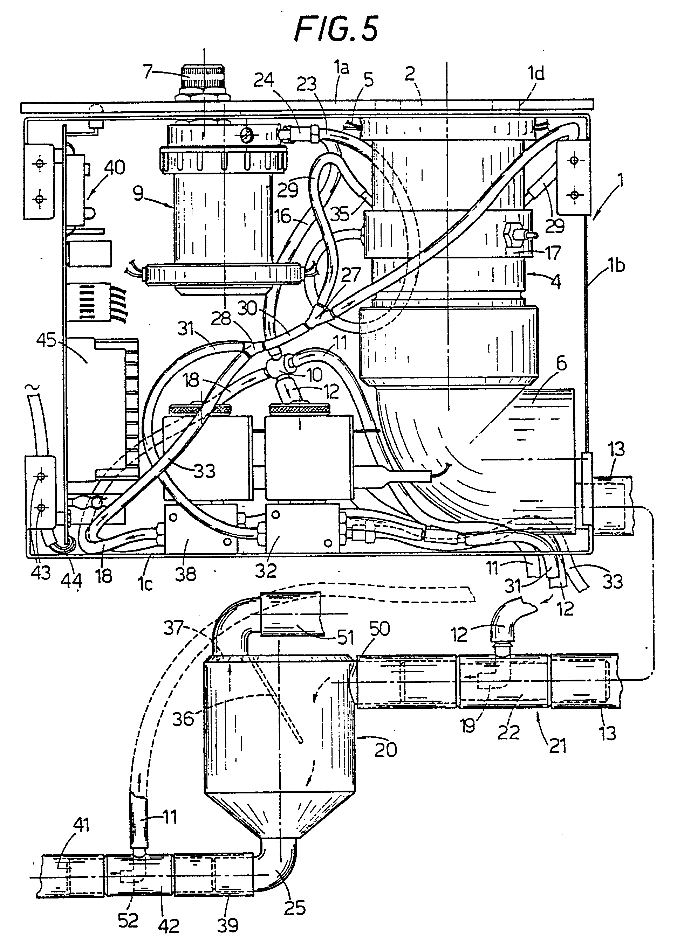

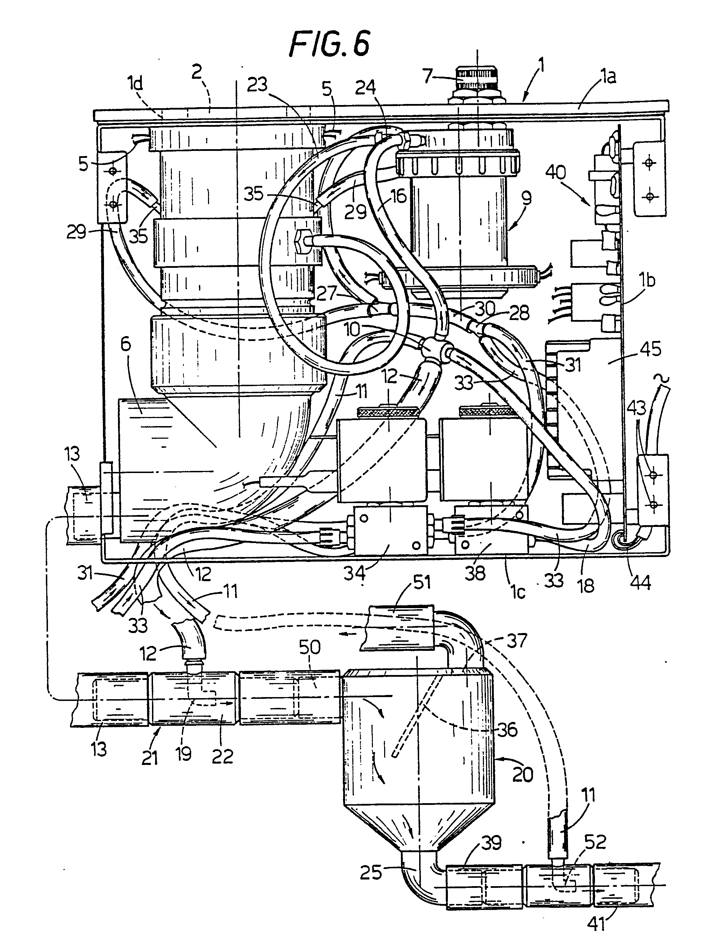

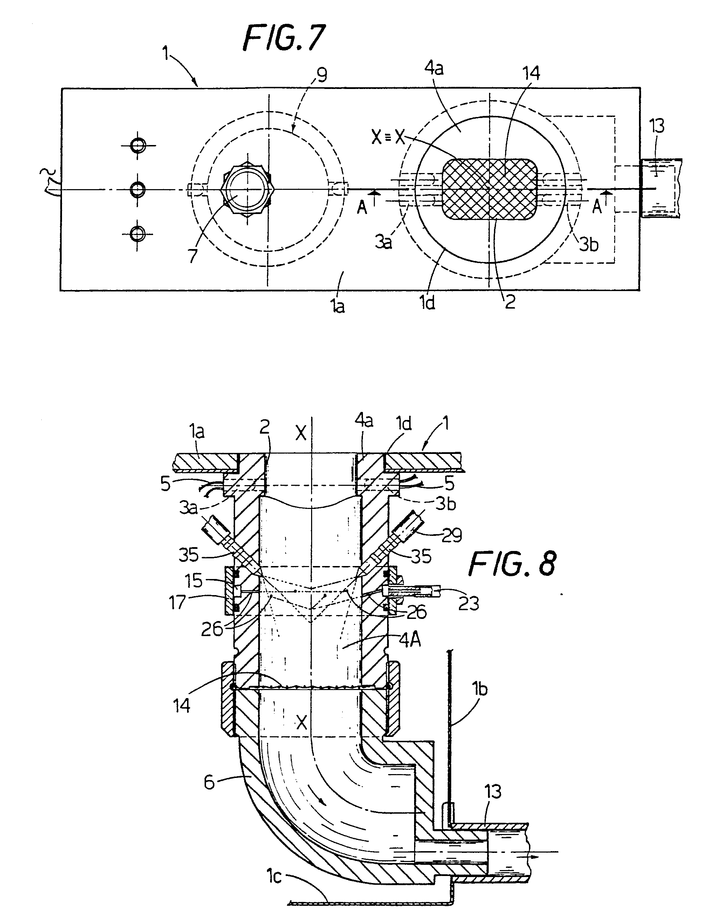

According to the second and preferred embodiment, the container 1 comprises a top wall 1a, the side walls 1b and a bottom wall 1c. In Figure 5 the front wall 1b has been removed and in Figure 6 the rear wall 1b, so that the inner components of the device can be seen. In the top wall 1a an opening 1d is arranged through which extends the top wall 4a of the body defining in the inside the treatment chamber 4. In said top wall 4b is arranged an entrance opening 2. In opposite zones of the opening 2 are mounted the two photoemission elements 3a, 3b of at least one photo-electric cell (preferably, two photo-electric cells connected in parallel, which are inserted in the circuit 5 so that said entrance opening 2 will be obstructed by a broad ray screen, which will be interrupted when an instrument is introduced into the chamber 4, for the purpose which will be hereinafter described. The chamber 4 is of a substantially cylindrical shape (see Figure 8) and its lower portion is connected with a tubular union conduit 6 curved at an angle of about 90° and which, in turn is connected with a discharge conduit 13. Between the lower open end of the chamber 4 and the union conduit 6 is mounted a net 14 or other suitable perforated diaphragm adapted to separate the biggest residues which could obstruct the discharge conduit 13.

The body forming the chamber 4 is mounted in the container 1 in any disassemblable manner so as to permit that the maintenance and overhauling operations as well as the substitution of the damaged parts thereof can be easily carried out. At the central portion of the chamber 4 open at least two nozzles 35 placed in substantially diametrally opposited positions and so oriented so as to deliver jets directed downwardly towards the axis X—X of the chamber 4 so as to can hit the instruments which will be introduced into the chamber 4, and which will lean on the filtering wall 14. Said nozzles 35 are fed by means of pipes 29, which by means of a three-way pipe fitting 27 are connected with a single pipe 30, to which by means of another three-way pipe fitting 28 are connected a pipe 31 conveying compressed air, supplied by an external air source (not shown), said pipe 31 being controlled by an electric valve 32, as well as a pipe 33 conveying pressurized water supplied by an external water source (not shown), in said pipe 33 being inserted a second electric valve (34). Normally the electrovalves 32 and 34 close. Underneath the first series of nozzles 35 delivering the jets designed to wash the instruments and to remove therefrom the residues adherent thereto under the violent mechanical effect of the jets of pressurized air and water, delivered by the nozzles 35 and which strike with force against the instrument, other nozzles 26 are mounted adapted to deliver jets in part inclined downwardly towards the axis X—X and in part directed radially. The nozzles 26 have the task of delivering air with an addition of a disinfectant medium, which is produced into a nebulizer 9 and is supplied through the pipe 23. For such a purpose about the side wall of the chamber 4 and underneath the nozzles 35 an annular band 17, is mounted, in which an annular manifold 15 is arranged (Figure 8) through which the nozzles 26 are fed, which deliver pressurized air jets dragging together particles of the disinfectant medium which is conveyed into the manifold 15 by the pipe 23 connected to the outlet 24 of the unit 9 (Figure 5). The nozzles 26 produce jets which are in part radially directed and in part downwardly directed towards the axis X—X said jets having as first task that of creating a downwards suction effect of the drops which can be produced, as a result of the impact of the jets delivered by the nozzles 35 against the instrument, and, as a second and main task, that of carrying out the drying up and the disinfection of the instrument after its washing. It is to be noted that the device is so programmed that the jets coming out of the nozzles 26 are delivered during a predetermined time interval which is greater than that of the jets of the nozzles 35; i.e. the jets delivered by the nozzles 26 continue to be dispensed also after the jets of nozzles 35 stop. The nebulizing 9 is of the type already described and shown in the first embodiment. Thus it comprises an inner chamber from the upper part of which through the already mentioned pipe union 23 the air with the addition of the disinfectant medium is delivered, said pressurized air with the disinfectant medium being obtained, supplying compressed air into the nebulizer 9 through a pipe 16 connected with an external air source (not shown), said pressurized air entering the unit 9 through a pipe (which is not shown in the Figures 5 to 9) which opens near the bottom of said inner chamber which contains the disinfectant medium which will be charged through a pipe union closed by the plug 7. The air coming out from the said pipe bubbles through said liquid dragging together liquid particles so as to form the mixture which is used for the disinfection and the drying of the instrument, said mixture being conveyed by the pipe 23 to the manifold 15, which in turn feeds air to the nozzles 26. The pipe 16 (Figure 6) receives the air by means of a pipe 18 in which is provided the third electric valve 38 which normally closes, said pipe 18 being connected to the pipe 16 by means of a four-way pipe fitting 10 from which are branched off the said pipe 16 as well as the pipes 11 and 12 which serve to convey the pressurized air to a device generally indicated 20 mounted on the discharge pipe 13 of the dirty water. Said unit 20 comprises a pipe length 21 connected to the pipe 13, in which a conduit 22 is arranged in which a nozzle 19 is mounted delivering pressurized air conveyed by the pipe 12, the said nozzle being oriented in the same direction of the flow of the dirty water, thus creating a suction effect which makes easier the discharge of the dirty water from the treatment chamber 4. The device 20 comprises an inner cylindrical chamber, the bottom of which is connected by a funnel-like portion with the outlet pipe union 25, while an inclined partition wall or screen 36 deviates downwardly the water flow which arrives through the inlet conduit 50 connected to the pipe length 21, said water flow thus entering the chamber of the unit 20 at its upper part, while through the top wall of said inner chamber of the unit 20 behind the screen 36 an outlet orifice 37 is provided for the discharge of the air through an air discharge pipe 51. To the outlet conduit 25 is connected a pipe length 39 in the inner conduit of which is mounted a nozzle 52 designed to act as the similar nozzle 19 above mentioned, so that by means of pressurized air conveyed through the pipe 11 and the nozzle 52 inside the flow of dirty water is delivered a jet of pressurized air directed in the direction of the water flow and which creates upstream thereof a suction which co-operates to make easier the discharge of the dirty water which through the pipe 41 will be guided towards the network for the elimination of the dirty waters.

Now it will be described the system for an automatic control of the operation of the various operative units of the device of this invention in the sequence and for the predetermined times.

At 44 is indicated the supply line which by means of the terminals 43 will be connected with a source of electric current. In the line 44 a transformer 45 is inserted, said line 44 being connected to the block 40 which represents a programmer and actuator, comprising logical circuits which become operative under the consent of the photoelectric cells 3a, 3b when the barrage rays of the entrance opening 2 of the chamber 4 will be interrupted by the introduction of the instrument to be cleaned. Said logical circuits are designed to cause the opening of the electro-valves 32, 34, 38. Thus after the instrument has been introduced into the chamber 4, the electric valves 32, 34 and 36 are caused to be opened so that the nozzles 35 will deliver strong jets of air and water, which carry out the cleaning (of the instrument) from which will be removed the possible materials which can be adhered to the instrument, while the series of jets of air and disinfectant will be delivered from the nozzles 26 in the first phase serve only for creating a suction effect towards the discharge conduit of the water drops which can be formed, thus preventing that said water drops can escape outside through the entrance opening 2. The logical circuits are so programmed that the valves 32 and 34 are maintained in their open position for a time interval less that of the valve 38. For instance, the valves 32 and 34 are maintained in their open condition for about 5 seconds while the valve 38 remains in its opened position for about 20 seconds, thus after about 5 seconds the jets produced by the nozzles 35 stop, while the delivery of the air added with disinfectant through the nozzles 26 continues during further 15 seconds so as to permit to obtain the drying and disinfection of the instrument. Afterwards the valve 38 closes and the instrument can be removed perfectly cleaned by means of the device and with the lowest consumption of water, air and electric energy. Of course, nothing prevents to provide means for the heating of the drying air as well as of the washing water by inserting heating devices in the piping according to expedients which are accessible to any person skilled in the art.

In the case in which can be expected that the pressure of the water distribution network be too low or when could be supposed that said pressure can be subjected to frequent drops, the valve 34 can be eliminated, so as to maintain the sole valve 32 controlling the supply of the pressurized air. The water flow will be guided so as to join with the compressed air flow conveyed by the supply pipe with the interposition of an already known spraying unit which will serve as a mean of compensation for any change of pressure of the water-air mixture which will be formed into said unit and which will be conveyed into the pipes 30 and then into the pipes 29 feeding the nozzles 35, as has been hereinbefore described. The third embodiment can be considered a combination of the two preceding solutions but it is, in particular a variant of the second embodiment, while from the first one only the characteristic rises that in the single washing chamber 204, upstream of the nozzles 35 delivering the washing jets, a series of nozzles 213, 213a is also provided, said nozzles delivering air containing a disinfectant medium so as to create a barrage or screen which prevents any escape of water drops from the chamber 204, while in the same time carries out a first disinfection of the instruments.

Therefore only those parts of the device are described which are modified. 102 indicates a group to which are connected the pipe 220 conveying the air and the pipe 230 conveying the water respectively; 40 is the programmer and 9 the nebulizer provided for producing the air incorporating the disinfectant medium, which will be charged through a pipe union closed by the plug 7.

According to this variant the treatment chamber 204 has a frusto-conical shaped tapered upwardly and provided with an entrance opening 2 controlled by at least a photo-electric cell 3a, 3b, inserted in the circuit 5, as described in the second embodiment. The photo-electric cell 3a, 3b controls the starting of the programmer 40. The lower end of the chamber 204 is yet closed by a filtering grating 14 and is put in communication with the discharge conduit 13. Underneath the entrance opening 2 are provided two crowns of nozzles 213 and 213a which have skew axes with respect of the axis X—X of the chamber 204 so as to deliver sub-tangential jets which are also inclined downwardly. The inclination of the jets of the second crown of jets 213a is greater than that of the first crown 213. Said nozzles 213 and 213a receive air added with a disinfectant medium, which is conveyed into the manifold 212 and which is fed by the pipes 224a and 224, from the unit 9 which is operatively identical to the units 9 of the two preceding embodiments.

Downstream of the nozzles 213, 213a which have the task of carrying out the first disinfection of the instrument and at the same time of creating a barrage against the escape of water drops, as has been provided in the first embodiment, are provided the nozzles 35 which have tasks, and dispositions identical to those of the nozzles 35 of the two preceding embodiments and which are fed by air and water which are conveyed by the pipes 227a, 227 and 233a and 233 respectively. The pipe 227 is controlled by the electric valve 32 and the pipe 233 by the electric valve 34. The feeding pipe 220 of the air is connected to the valve 32 by the pipe 225 and the outlet orifice of this valve is connected to the nozzles 35 by the pipes 227, 227a, 227b while the same supply pipe 220 by means of the pipe 221 is connected to the electric valve 38 which is, in turn, connected to the nebulizer 9 by means of the pipe 223. The atomizer produces a flow of air containing a disinfectant medium, said air flow by means of the pipes 224 and 224a is conveyed to the first system of nozzles 213 and 213a, and by means of the pipes 224, 224b is conveyed to the second series of nozzles 226 mounted below the washing nozzles 35 and having the same task and disposition as those of the nozzles 26 provided in the second embodiment.

The main water supply pipe 230 is connected to the electric valve 34 by the pipe 231, the outlet orifice of said valve is connected by the pipes 233, 233a, 223b to the nozzles 35.

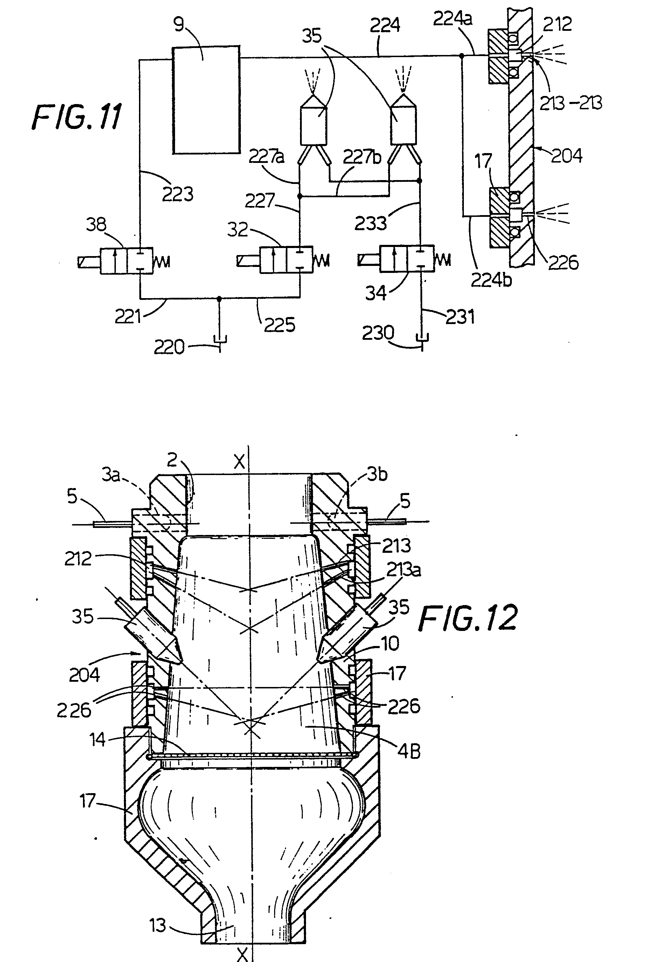

The Figure 11 shows the flow diagram of the air and water circuits of this third embodiment. This third embodiment will be not furtherly described and illustrated, since it is operatively identical to the preceding one.

## Claims

1. A cleaning, disinfecting and drying device for dental instruments, as drills, turbine drills, aspirators, dental mirrors and the like, and adapted to be used during dental treatments, which comprises a box-like container (1), into which at least one treatment chamber (4, 104, 204) is provided, having a top entrance opening for the introduction of the instrument to be cleaned, and a lower discharge opening characterized by the fact that the chamber (104, 4, 204) has a substantially cylindrical shape of a vertical axis and the top entrance opening has a permanently open, large, upper entrance duct (2), adapted to permit the insertion into said chamber of any instrument to be cleaned, the chamber having a lower perforated bottom wall (14) for supporting said instrument, under which wall (14) opens a discharge pipe (13), associated with suction means for obtaining a forced quick removal of the waste water as well as of the solids contained therein, in said chamber, downstream of said duct (2), a first plurality of nozzles (35) open, which are arranged in a horizontal annular row and to which pressurized air and water are fed, supplied by external sources, wherein the axes of said nozzles are directed toward the vertical axis of said chamber and downwards, adapted to clean the instrument by a strong mechanical action and, at the same time, to create a suction effect for preventing the drops or the like to come out of the duct (2), while up- and/or downstream of said plurality of nozzles (35), in the same chamber (104, 4, 204), and/or in a separated similar vertical chamber (105), having a permanently open entrance duct (103), a second plurality of nozzles (26, 226, 134) is arranged in a substantially horizontal annular row, said nozzles (26, 226, 134) being fed with a mixture of pressurized air and a disinfectant medium supplied from a nebulizing unit (9) connected to an external source of pressurized air and to container of the disinfectant medium, the pipes conveying the pressurized air being controlled conjunctly by a valve unit (32, 38, 128), while the pipes conveying the pressurized water are controlled by a valve (34, 127), said valves being normally closed, and being caused to open, in a predetermined time sequence, manually or automatically or by means of push buttons (106, 107) under the control of a programmer (40) which becomes operative in response of a signal produced by at least a photoelectric cell (3a, 3b) mounted in the entrance duct (2) and which is adapted to sense the presence of a portion of the instrument body into said duct (2).

2. A device according to claim 1, whereby near the opening duct (2), an annular manifold (115) is arranged which is connected with the nozzles (126) which deliver into the chamber (104) the mixture of air and disinfectant medium conveyed into the manifold (115) by a pipe (117), the nozzles (35) are connected with pipes (116 and 122), respectively conveying the air and the water coming from the external source or unit (108);

— the second chamber (105) has a discharge pipe union (131), in the side wall of this chamber a manifold (133) is arranged connected through the pipes (117A, 117C) with the nebulizer (9), said manifold (133) being put in communication with the chamber (105) by means of the nozzles (134), the unit (108) being fed by the air, which is supplied by an external compressor, through a pipe (120) in which is inserted a valve (128) which normally closes, but which can be opened by means of the push-button (107), as well as by the water supplied by the external water network, said water being fed to the inlet orifice (121), and being under the control of a diaphragm valve (142) which normally opens and which closes, when air is supplied into the unit (108), while the nebulizer unit (9) comprises a reservoir (36) of the disinfectant medium (37) and which is connected with an external air compressor by means of the pipe (122), in which is inserted a valve (127), which normally closes and which can be opened by means of the push-button (106).

3. A device according to claims 1 and 2, wherein the unit (108) comprises a reservoir (139) adapted to contain a predetermined volume of water which is fed by a pipe (141) which is connected with the inlet orifice (121), which is connected, in turn, to a pipe (145) in which is inserted the diaphragm valve (142), the diaphragm of which is put under the action of the air pressure fed into the unit (108) through the inlet pipe union (143) by the pipe (124), said diaphragm being so arranged to cause the closure of the valve (142) when the pressurized air enters the unit (108) and arrives above the water surface of the water collected into the reservoir (139), said water being pushed to raise along a draft pipe (140) by said pressurized air and being caused to pass through the outlet pipe union (119) and to be conveyed by a pipe (122) to each nozzle (35), into which said water mixes with the air flow coming out of the unit (108) through an outlet pipe union (118) connected to the nozzles (35) by the pipe (116), air which enters the pipe union (124) and which is conveyed by the pipe (143) in which is inserted the valve (128) and which is connected with the external air compressor.

4. A device according to claims 1 and 2, wherein the pressurized air coming from the external compressor through the pipe (144A), the valve (127) and the pipe (120), reaches the inlet pipe union (125) of the nebulizer (9), which is connected to a pipe (138) which opens just over the bottom of a reservoir (137) of the nebulizer (9), in which is contained a disinfectant liquid (37), charged through a pipe (110), the air coming out from said pipe forming bubbles in the liquid which drag together disinfectant particles, said air being then supplied, through the pipe union (123), the pipe (117C) to a three-way pipe fitting (117B) to which are connected the pipes which respectively fed the manifolds (115 and 133).

5. A device according to claim 1, wherein the entrance opening duct (2) is controlled by at least one photo-electric cell (3a, 3b), while at the central part of the chamber (4) are mounted at least the two oriented nozzles (35) connected to pipes (29) conveying a pressurized air and water flow, underneath said nozzles (35) the other oriented nozzles (26) are mounted, which are fed by an annular manifold (15) connected with a pipe (23) conveying air containing a disinfectant medium and produced in the nebulizer (9), underneath the perforated wall (14) the chamber (4) being connected, by means of a conduit (6) forming an angle, with the discharge pipe (13) of the dirty water, in which a unit (20) is inserted adapted to make easier the water discharge by means of jets of pressurized air which are injected into the dirty water flow, while the pressurized air and water feeding the device are supplied by an external source, the pipes (29) conveying the pressurized air and water to the nozzles (35) being fed by pipes (31 and 33 respectively) in which are inserted electric valves (32 and 34 respectively) which normally close, while the pipe (18), which through the pipe (16) feeds the nebulizer (9) is controlled by an electric valve (38), normally closed, the electric valves (32, 43 and 38) being caused to open under the control of logic circuits of a programmer (44) which is made operative when the rays emitted from the photo-electric cell (3a, 3b) are interrupted by the instrument to be cleaned.

6. A device according to claims 1 and 5 wherein the nozzles (35) deliver jets which are oriented so as to be directed downwardly towards the axis (X—X) of the chamber (4), while the nozzles (28) are oriented in part radially and in part downwardly towards the axis (X—X) of the chamber (4).

7. A device according to claim 1, wherein the unit (20) includes a chamber provided with an upper inlet pipe union (50) and of a lower outlet pipe union (25), in the front of the inlet orifice (50) a baffle wall (36) is mounted which deviates the water flow downwardly, while behind said wall and through the top wall of this chamber an opening (37) is arranged which is connected with a pipe union (51) for the discharge of the air, upstream of the inlet pipe union (50) and downstream of the outlet pipe union (25) pipe lengths (21 and 39) are respectively mounted, in the inside of each of which a nozzle (19 and 52) is respectively inserted, said nozzles (19 and 52) delivering jets of pressurized air in the direction of the flow of the dirty water, said jets being fed by the air feeding pipes (11 and 12).

8. A device according to claims 1, 5 and 6, wherein the air supplying pipe (18) downstream of the electric valve (38) is connected by means of a four-way pipe fitting (10) with the pipe (16) feeding the nebulizer (9) as well as with the pipes (11 and 12) feeding the nozzles (52 and 19) of the device provided for improving the discharge (of the water) and comprising the unit (20) and the pipe lengths (21 and 39).

9. A device according to claim 1, wherein the programmer-actuator (40) comprises logical circuits energized by electric current supplied through a line (44) having the terminals (43) connected with the supply network of the electric current, in the line (44) being inserted a transformer (45), said logic circuits being made operative under the control of the photo-electric cell (3a, 3b) included in the line (5) and which cause the electric valves (32 and 34) and the electric valve (38) to open when an instrument is introduced in the chamber (4 or 204) and therefore the line (5) is interrupted between the elements (3a, 3b) of the photo-electric cell, as well as for maintaining said electric valves in their open condition during different times, the opening time of the valves (32 and 34) being shorter than that of the electric valve (38).

10. A device according to claims 1, 5 and 9, wherein in the chamber (204), before the series of the nozzles (35) two crowns of nozzles (213, 213a) are arranged, which are fed through an annular manifold (212), connected with the nebulizer (9) by means of the pipes (224a, 224), said nozzles being so oriented so as to deliver sub-tangentially jets directed downwardly and which have an inclination that in the nozzles (213a) of the second crown is greater than that in the nozzles (213) of the first crown.

## Patentansprüche

1. Reinigung-, Desinfektion- und Trocknungsvorrichtung für Zahninstrumente, insbesondere Bohr, Turbinenbohr, Saugfilter, Zahnspiegel und dergleichen für die Verwendung in den Zahnbehandlungen, bestehend aus einem kastenförmigen Behälter (1), in dem zumindest eine Behandlungskammer (4, 104, 204) vorgesehen ist, die mit einer oberen Eintrittsöffnung für die Einbringung der zu reinigenden Zahninstrumente und einer unteren Austrittsöffnung versehen ist, dadurch gekennzeichnet, daß die Behandlungskammer (104, 4, 204) im wesentlichen zylinderförmig ausgebildet und mit einer senkrechten Achse versehen ist, daß in die obere Eintrittsöffnung ein oberes ständig geöffnetes, breites Rohrstück (2) für die Einbringung der zu reinigenden Zahninstrumente in die obengenannte Kammer einmündet, welche eine untere, gelochte Bodenwand (14) für die Unterstützung der Zahninstrumente aufweist, welche Bodenwand (14) mit einem mit Absaugmittel für die schnelle Druckabführung der darin enthaltenden Abwässer sowie Feststoffe verbundenen Auslaufrohr (13) versehen ist, daß in die genannte Behandlungskammer abwärts von dem Rohrstück (2) eine erste Vielzahl von in einer waagrechten, ringförmigen Reihe angeordneten, mit von äußeren Anlagen versorgten Druckluft und Wasser eingespeisten Düsen (35) einmündet, deren Achsen abwärts zur senkrechten Achse der Behandlungskammer ausgerichtet sind, wobei die Düsen durch eine starke, mechanische Einwirkung die Zahninstrumente reinigen und gleichzeitig eine Absaugswirkung zur Verhinderung des Austretens der Wassertröpfen von dem Rohrstück (2) ausüben, daß auf- oder/und abwärts von der genannten Vielzahl von Düsen (35) eine zweite Vielzahl von Düsen (26, 226, 134) in derselben Behandlungskammer (104, 4, 204) und/oder in einer getrennten, ähnlichen, senkrechten Kammer (105), die ein ständig geöffnetes Eintrittsrohrstück (103) aufweist, in einer im wesentlichen waagrechten, ringförmigen Reihe angeordnet ist, wobei die Düsen (26, 226, 134) mit einem Gemisch von Druckluft und einem Desinfektionsmittel eingespeist werden, das von einem mit einer äußeren Quelle der Druckluft und einem Behälter des Desinfektionsmittels verbundenen Zerstäuber (9) zugeführt wird, daß die die Druckluft zuführenden Röhren durch ein Ventil (32, 38, 128) und die das Druckwasser zuführenden Röhren durch ein Ventil (34, 127) gemeinsam gedrosselt werden, wobei diese Ventile normalerweise geschlossen stehenbleiben und in einer vorbestimmten Zeitfolge von Hand oder selbsttätig oder durch Druckknöpfe (106, 107) und durch Aussteuerung einer Programmiereinheit (40) geöffnet werden, die auf ein durch zumindest eine Photozelle (3a, 3b) erzeugtes Signal anspricht, welche Photozelle in dem Eintrittsrohrstück (2) angeordnet ist und die Zahninstrumente in diesem Eintrittsrohrstück (2) abtastet.

2. Vorrichtung nach Anspruch 1, dadurch gekennzeichnet, daß im Bereich des Eintrittsrohrstückes (2) ein Ringsammler (115) angeordnet ist, der mit den Düsen (126) verbunden ist, die in die Behandlungskammer (104) das durch eine Röhre (117) in den Ringsammler (115) zugeführte Gemisch von Druckluft und Desinfektionsmittel einspeisen, wobei die Düsen (35) mit Röhren (116 bzw. 122) verbunden sind, die die Druckluft und das Druckwasser- von der äußeren Anlage (108) zugeführt- fördern, wobei die zweite Kammer (105) einen Auslassstützen (131) und einen in der Seitenwand der zuletztgenannten Kammer angeordneten Sammler (133) aufweist, der über Röhren (117A, 117C) mit dem Zerstäuber (9) und über Düsen (134) mit der Kammer (105) verbunden ist, wobei die Anlage (108) mit der von einem äußeren Luftkompressor zugeführten Luft über eine Röhre (120) eingespeist wird, in der ein Ventil (128) eingesetzt ist, das normalerweise geschlossen stehenbleibt, aber durch einen Druckknopf (107) sowie durch das von der äußeren Wasserversorgung zugeführte Wasser geöffnet werden kann, das der Eintrittsöffnung (121) zugeführt und durch eine Drosselklappe (142) geregelt wird, die normalerweise offen stehenbleibt und dann zugeschlossen wird, wenn Luft der Anlage (108) zugeführt wird, wobei der Zerstäuber (9) mit einem Behälter (36) des Desinfektionsmittels (37) versehen und mit einem äußeren Luftkompressor über eine Röhre (122) verbunden ist, in der ein Ventil (127) eingesetzt ist, das normalerweise geschlossen stehenbleibt und durch den Druckknopf (106) geöffnet werden kann.

3. Vorrichtung nach Anspruch 1 und 2, dadurch gekennzeichnet, daß die Anlage (108) einen Behälter (139) aufweist, der eine vorbestimmte Menge an Wasser enthält, das über eine mit der Eintrittsöffnung (121) verbundene Röhre (141) zugeführt wird, wobei diese Eintrittsöffnung mit einer Röhre (145) verbunden ist, in der eine Drosselklappe (142) eingesetzt ist, deren Scheibe von der in die Anlage (108) durch den Einlassstutzen (143) über die Röhre (124) zugeführten Druckluft gesteuert wird und die Drosselklappe (142) dann zuschliesst, wenn die Druckluft in die Anlage (108) eingeführt wird und gegen die Wasseroberfläche des Behälters (139) druckt, wobei das im Behälter enthaltende Wasser entlang eine Röhre (140) durch die Druckluft steigt und durch den Auslassstutzen (119) durchgelassen und über eine Röhre (122) sämtlichen Düsen (35) zugeführt wird, in den das Wasser mit der von der Anlage (108) durch einen über eine Röhre (116) mit den Düsen (35) verbundenen Auslassstützen (118) zugeführten Luft gemischt wird, die durch den Einlassstutzen (124) über eine Röhre (143), in der das Ventil (128) eingesetzt ist, von dem äußeren Luftkompressor zugeführt wird.

4. Vorrichtung nach Anspruch 1 und 2, dadurch gekennzeichnet, daß die von dem äußeren Luftkompressor über die Röhre (144A), das Ventil (127) und die Röhre (120) zugeführte Druckluft dem Einlassstutzen (125) des Zerstäubers (9) zugeführt wird, der über eine Röhre (138) mit dem Behälter (137) im Bereich seiner Bodenwand verbunden ist, der eine über eine Röhre (110) eingespeiste Desinfektionsflüssigkeit enthält, wobei die von der obengenannten Röhre zugeführte Druckluft durch die Flüssigkeit durchbläst und Desinfektionsmittelteilchen mitnimmt, wonach die Druckluft über den Stutzen (123) und die Röhre (117C) einem Dreiwegverbindungsrohr (117B) zugeführt wird, das mit den die Sammler (115 und 133) einspeisenden Röhren verbunden ist.

5. Vorrichtung nach Anspruch 1, dadurch gekennzeichnet, daß das Eintrittsrohrstück (2) durch zumindest eine Photozelle (3a, 3b) abgetastet wird, wobei in dem zentralen Bereich der Kammer (4) zumindest zwei mit den Druckluft und Druckwasser zuführenden Röhren (29) verbundene, ausgerichtete Düsen (35) angeordnet sind, unter denen zusätzliche ausgerichtete Düsen (26) angebracht sind, die von einem ringförmigen, mit einer die in dem Zerstäuber (9) erzeugte und ein Desinfektionsmittel enthaltende Luft zuführenden Röhre (23) verbundenen Sammler (15) eingespeist werden, wobei unter der gelochten Wand (14) über eine abgewinkelte Röhre (6) die Kammer (4) mit der Auslassröhre (13) des Abwassers verbunden ist, in der eine Einheit (20) eingesetzt ist, die durch in das Abwasser eingespritzte Strahlen von Druckluft den Wasserauslass erleichtert, wobei die Druckluft und das Druckwasser von einer äußeren Quelle eingespeist und den Düsen (35) über Röhren (29) zugeführt werden, die mit den Röhren (31 bzw. 33) verbunden sind, in welchen elektrische, normalerweise abgeschaltete Ventile (32 bzw. 34) eingesetzt sind, wobei die über die Röhren (16) den Zerstäuber (9) einspeisende Röhre (18) durch ein elektrisches, normalerweise abgeschaltetes Ventil (38) gedrosselt wird, wobei die elektrischen Ventile (32, 43 und 48) durch Aussteuerung von logischen Schaltungen (44) einer Programmiereinheit eingeschaltet werden, die ihrerseits dann eingeschaltet wird, wenn die von der Photozelle (3a, 3b) ausgestrahlten Strahlen von dem zu reinigenden Zahninstrument unterbrochen werden.

6. Vorrichtung nach Anspruch 1 und 5, dadurch gekennzeichnet, daß die Düsen (35) abwärts zu der Achse (X—X) der Kammer (4) ausgerichtete Strahlen ausstrahlen, wobei die Düsen (28) teilweise radiall, teilweise abwärts zu der Achse (X—X) der Kammer (4) ausgerichtet sind.

7. Vorrichtung nach Anspruch 1, dadurch gekennzeichnet, daß die Einheit (20) eine mit einem oberen Einlassstutzen (50) und einem unteren Auslassstutzen (25) versehene Kammer aufweist, daß eine gegenüber dem Einlassstutzen (50) angeordnete Leitwand (36) den Wasserdurchfluss abwärts ablenkt, wobei hinter dieser Leitwand und in der Oberwand der Kammer eine mit dem Stutzen (51) verbundene Öffnung (37) für den Luftablass vorgesehen ist, daß stromaufwärts von dem Einlassstutzen (50) bzw. abwärts von dem Auslassstutzen (25) Rohrstücke (21 bzw. 39) angeordnet sind, in denen eine Düse (19 bzw. 52) eingesetzt ist, die in der Durchflussrichtung des Abwassers Druckluftstrahlen ausstrahlt, wobei die Druckluft über Röhren (11 bzw. 12) zugeführt wird.

8. Vorrichtung nach Anspruch 1, 5 und 6, dadurch gekennzeichnet, daß die die Druckluft zuführende Röhre (18) stromabwärts von dem elektrischen Ventil (38) über ein Vierwegverbindungsrohr (10) mit der den Zerstäuber (9) einspeisenden Röhre (16) sowie mit den die Düsen (52 bzw. 19) einspeisenden Röhren (11 bzw. 12) der Einheit verbunden ist, welche den Wasserablass erleichtert und mit der Einheit (20) und den Rohrstücken (21 und 39) versehen ist.

9. Vorrichtung nach Anspruch 1, dadurch gekennzeichnet, daß die Programmiereinheit (40) logische Schaltungen aufweist, die von dem elektrischen, über eine mit dem Stromnetz (43) verbundene Leitung (44) versorgten Strom eingeschaltet werden, wobei ein Transformator (45) in der Leitung (44) eingesetzt ist, daß die logischen Schaltungen unter Aussteuerung der Photozellen (3a, 3b) eingeschaltet werden, die in der Leitung (5) eingesetzt sind und die elektrischen Ventile (32 und 34) sowie das elektrische Ventil (38) dann öffnen, wenn ein Zahninstrument in die Behandlungskammer (4 oder 204) eingeführt wird, so daß die Leitung (5) zwischen den Photozellen (3a, 3b) unterbrochen wird, welche Photozellen die elektrische Ventile im geöffneten Zustand in verschiedenen Zeiten einhalten, wobei die Zeiten des geöffneten Zustands der elektrischen Ventile (32 und 34) kürzer sind, als die des elektrischen Ventils (38).

10. Vorrichtung nach Anspruch 1, 5 und 9, dadurch gekennzeichnet, daß in der Behandlungskammer (204) vor dem Düsensatz (35) zwei ringförmige Düsensätze (213, 213a) angeordnet sind, die über einen ringförmigen, mit dem Zerstäuber (9) über Röhren (224a, 224) verbundenen Sammler (212) verbunden sind, wobei die genannten Düsensätze so ausgerichtet sind, daß sie abwärts zugewandte Tangentialstrahlen ausstrahlen, wobei die Neigung des Düsensatzes (213a) größer ist, als die Neigung des Düsensatzes (213).

## Revendications

1. Dispositif de nettoyage désinfections et séchage pour instruments dentaires, tels que des forets, forets à turbine, aspirateurs, petits miroirs dentaires et similaires et qui est approprié à être utilisé pendant les traitements dentaires et qui comporte un récipient (1), semblable à une boîte, dans lequel au moins une chambre de traitement (4, 104, 204) est ménagée, ayant une ouverture supérieure d'entrée pour l'introduction de l'instrument à nettoyer, et une ouverture inférieure de dégorgement, caractérisé en ce que la chambre (104, 4, 204) a essentiellement une forme cylindrique, dont l'axe est verticale, et que son ouverture supérieure comporte un conduit supérieur d'entrée (2) large et toujours ouvert, permettant l'introduction dans la chambre susdite d'un quelconque instrument à nettoyer, cette chambre ayant une paroi perforée de fond (14) pour soutenir l'instrument susdit, tandis que, au dessous de cette paroi (14) s'ouvre un tube de dégorgement ou décharge (13), relié à des moyens d'aspiration aptes à provoquer une évacuation rapide et forcée de l'eau sale, ainsi que des solides contenus dans cette-ci, dans cette chambre, en aval du dit conduit (2), on a prévu une première pluralité de buses ouvertes (35) qui sont arrangées le long d'une ligne horizontale circulaire et auxquelles sont alimentées de l'air et de l'eau qui sont fournis par des sont dirigés vers l'axe verticale de cette chambre et vers le bas et aptes à nettoyer l'instrument avec une forte action mécanique et, en même temps, à créer un effet d'aspiration apte à empécher que les goutes puissent sortir hors le conduit (2), tandis que, en amont et/ou en eval de cette pluralité de buses (35), dans la même chambre (104, 4, 204) et/ou dans une chambre séparée verticale similaire (105), ayant un conduit d'entrée permanentement ouvert (103), une deuxième pluralité de buses (26, 226, 134) est arrangée le long d'une ligne essentiellement circulaire ces buses (26, 226, 134) étant alimentées avec un mélange d'air mis en pression et une substance désinfectante, alimenté par une unité de nébulisation (5), reliée à une source extérieure d'air comprimé, ainsi qu'à un récipient contenant la substance désinfectante, les tubes abducteurs de l'air comprimé étant contrôlés conjointement par un système de soupapes (32, 38, 128), tandis que les tubes abducteurs de l'eau en pression sont contrôlés par une soupape (34, 127), ces soupapes étant normalement fermées et leur ouverture étant provoquée, selon une séquence de temps prédéfinie; à l'aide d'une opération manuelle ou bien automatique ou à l'aide de boutons-poussoirs (106, 107) sous le contrôle d'un dispositif de commande à programme (40), qui agit en réponse d'un signal fourni par au moins une cellule photo-électrique (3a, 3b), montée dans le conduit d'entrée (2) et qui est capable de détectér la présence d'une partie au moins du corps de l'instrument inseré dans le dit conduit (2).

2. Dispositif selon la revendication 1, caractérisé en ce que à proximité du conduit d'entrée (2) est arrangé un collecteur annulaire (115), qui est relié aux buses (126), qui refoulent dans la chambre (104) le mélange de l'air de la substance désinfectante, convoyé dans le collecteur (115) à travers le tube (117), les buses (35) étant reliées aux tubes (116 et 122), qui respectivement convoyent l'air et l'eau provenant de la source extérieure ou unité (108);

— la deuxième chambre (105) a une goulotte (131) pour le tube de décharge, tandis que dans la paroi latérale de cette chambre est arrangé un collecteur (133) relié par les tubes (117A, 117C) à un nébulisateur (9), ce collecteur (133) étant mis en communication avec la chambre (105) par les buses (134), l'unité (108) étant alimentée avec l'air, qui est fourni par un compresseur exterieur à travers le tube (120), dans lequel est insérée une soupape (128) qui est normalement fermée, mais qu'on peut faire ouvrir à l'aide du bouton-poussoir (107), ainsi que par l'eau alimentée d'un réseau extérieur de l'eau, cette eau étant alimentée à l'orifice d'entrée (121) et étant mise sous le contrôle d'une soupape à membrane (142) qui est normalement ouverte et qui sera fermée, lorsque de l'air sera alimenté dans l'unité (108), tandis que l'unité de nébulisation ou nébulisateur (9) comporte un réservoir (36) pour la substance désinfectante (37) et qui est relié avec un compresseur extérieur de l'air à travers le tube (122), dans lequel est insérée une soupape (127) qui est normalement fermée et qu'on peut faire ouvrir à l'aide d'un bouton-poussoir (106).

3. Dispositif selon les revendications 1 et 2, caractérisé en ce que l'unité (108) comporte un réservoir (139) apte à contenir un volume d'eau, établi à l'avance et qui est alimenté à travers le tube (141) qui est relié à l'orifice d'entrée (121), qui est relié, à son tour, au tube (145), dans lequel est inserée la soupape à membrane (142), cette membrane étant mise sous l'action de la pression de l'air alimenté dans l'unité (108) à travers la goulotte d'entrée (143) par le tube (124), la dite membrane étant agencée de maniére à provoquer la fermeture de la soupape (142), lorsque l'air comprimé entre dans l'unité (108) et arrive au dessus de la surface de l'eau contenue dans le réservoir (139), cette eau étant obligée à remonter le long du tube de prise (140) sous l'effet du dit air comprimé, et étant aussi obligée à passer au travers de la goulotte de sortie (119) et à être amenée par le tube (122) à chaque buse (35), dans lequel cette eau va se mélanger avec le courant de l'air sortant de l'unité (108) à travers la goulotte de sortie (118) relié aux buses (35) par le tube (116), cet air passant au travers de la goulotte (124) et étant amené dans le tube (114), dans lequel est inserée la soupape (128), tube, qui est relié au compresseur extérieur de l'air.

4. Dispositif selon les revendications 1 et 2, caractérisée en ce, que l'air comprimé, provenant du compresseur extérieur à travers le tube (144A), la soupape (127) et le tube (120), atteinds la goulotte d'arrivée (125) du nébulisateur (9), qui est relié à un tube (138) qui s'ouvre un peu au dessus du fond d'un réservoir (137) du nébulisateur (9), dans lequel est contenu un liquide désinfectant (37), chargé à travers un tube (110), l'air, qui va sortir du dit tube, formant des bulles dans le liquide, lesquelles entraînent avec eux les particules désinfectantes, cet air étant ensuite alimenté, à travers la goulotte (123) et le tube (117C) et un raccord à trois voies (117B), auquel sont reliés les tubes qui alimentent respectivement les collecteurs (115 et 133).

5. Dispositif selon la revendication 1, caractérisé en ce que l'ouverture dentée du conduit (2) est contrôlée par au moins une cellule photo-électrique (3a, 3b), tandis que à la partie centrale de la chambre (4) sont arrangées, au moins, deux buses orientées (35), reliées aux tubes (29) amenant le courant d'air comprimé et d'eau, au dessous de ces buses (35) des autres buses (26) sont montées, lesquelles sont alimentées par un collecteur annulaire (15) relié à un tube (23) amenant l'air contenant la substance désinfectante et qui a été produit dans le nébulisateur (9), au dessous de la paroi perforée (14), la chambre (4) étant reliée au tube de décharge (11) de l'eau sale par un conduit (6) formant un angle, dans le dit tube (13) étant insérée une unité (20) apte à rendre plus facile la décharge de l'eau à l'aide de jets d'air comprimé qui sont injectés dans le courant de l'eau sale, tandis que l'air comprimé et l'eau qui alimentent ce dispositif sont fournis d'une source extérieure, les tubes (29) amenant l'air comprimé et l'eau aux buses (35), étant alimentées par les tubes (31 et respectivement 33) dans lesquels sont insérées les soupapes électriques (32 et respectivement 34) qui sont normalement fermées, tandis que le tube (18), qui à travers le tube (16) alimente le nébulisateur (9), est contrôlé par une soupape électrique (38) qui est normalement fermée, les soupapes (32, 43 et 38) étant obligées à s'ouvrir sous la commande de la logique des circuits d'un programmeur (44) qui devient opératif lorsque les rayons émis par la cellule photo-électrique (3a, 3b) sont interrompus par le corps de l'instrument à nettoyer.

6. Dispositif selon les revendications 1 et 5, caractérisé en ce que les buses (35) refoulent des jets qui sont orientés de manière à être dirigés vers le bas et vers l'axe (X—X) de la chambre (4), tandis que les buses (28) sont orientées, en partie radialement et en partie vers les bas et vers l'axe (X—X) de la chambre (4).

7. Dispositif selon la revendication 1, caractérisé en ce que l'unité (20) comporte une chambre munie d'une goulotte supérieure d'entrée (50) et d'une goulotte inférieure de sortie (25), en face de l'ouverture d'entrée (50) étant montée un déflecteur (36) qui va dévier le courant d'eau vers les bas, tandis que, derrière ce déflecteur et au travers de la paroi supérieure de cette chambre est ménagée une ouverture (37) qui est reliée à la goulotte (51) pour la décharge de l'air, en amont de la goulotte d'entrée (50) et en aval de la goulotte de décharge (25), des tronçons de tube (21 et 39) étant respectivement montés, dans chaqu'un des tronçon une buse (19 et 52) est respectivement insérée, ces buses (19 et 52) laissant sortir des jets d'air comprimé dans la direction du courant d'eau sale, les dits jets étant fournis par les tubes (11 et 12) d'alimentation de l'air.

8. Dispositif selon les revendications 1, 5 et 6, caractérisé en ce que le tube (18) d'alimentation

23 **0 056 791** 24

de l'air, en aval de la soupape électrique (38), est relié, à l'aide d'un raccord à quatre voies (10), avec le tube (16) qui alimente le nébulisateur (9) ainsi que avec les tubes (11 et 12) qui alimentent les buses (52 et 19) du dispositif et qui est destiné à favoriser la décharge ou l'écoulement (de l'eau) et qui comprend l'unité (20) et les tronçons du tube (21 et 39).

9. Dispositif selon la revendication 1, caractérisé en ce que le dispositif de contrôle de programme-actuateur (40) comporte des circuits logiques excités par du courant électrique alimenté à travers une ligne électrique ayant les terminaux (43) reliés avec le réseau d'alimentation du courant électrique, dans la ligne (44) étant inséré un transformateur, les dits circuits logiques étant mis en condition opérative sous la commande de la cellule photo-électrique (3a, 3b) insérée dans la ligne (5) et qui fait ouvrir les soupapes électriques (33 et 34) et la soupape électrique (38), lorsque un instrument est introduit dans la chambre (4 ou 204) et, par conséquent, la ligne (5) est coupée entre les éléments (3a, 3b) de la cellule photo-électrique, et pour maintenir ces soupapes électriques dans leur position d'ouverture pendant des temps différents, les temps d'ouverture des soupapes (32 et 34) étant plus courts que celui de la soupape électrique (38).

10. Dispositif selon les revendications 1, 5 et 9, caractérisé en ce que dans la chambre (204), en avant de la série des buses (35) sont montées deux couronnes des buses (213, 213a), qui sont alimentées par un collecteur annulaire (212), relié avec le nébulisateur (9) par des tubes (224a, 224), ces buses étant orientées de sorte à délivrer sub-tangentiellement des jets dirigés vers le bas et qui ont une inclination qui est plus élevée pour les buses (213a) de la séconde couronne que pour les buses (213) de la première couronne.

13

FIG.1

0 056 791

FIG. 2

FIG.3

*FIG.4*

0 056 791

## FIG.5

# FIG.6

## FIG.7

## FIG. 8

**FIG. 9**

**FIG.10**

FIG.11

FIG.12